# EUROPÄISCHE PATENTSCHRIFT

(11) **EP 0 977 973 B1**
(45) Veröffentlichungstag und Bekanntmachung des Hinweises auf die Patenterteilung: **25.06.2003**
(21) Anmeldenummer: 98912222.1
(22) Anmeldetag: 20.02.1998
(51) Int. Cl.: G01B 9/02, G01S 17/32, G01S 17/36, G01R 25/00

(54) **SCHALTUNG ZUR SIGNALAUFBEREITUNG VON IN EINEM HETERODYNINTERFEROMETER AUFTRETENDEN SIGNALEN**
CIRCUITRY FOR PROCESSING SIGNALS OCCURRING IN A HETERODYNE INTERFEROMETER
MONTAGE POUR LA MISE EN FORME DE SIGNAUX APPARAISSANT DANS UN INTERFEROMETRE HETERODYNE

(30) Priorität: 28.02.1997 DE 19708163
(43) Veröffentlichungstag der Anmeldung: 09.02.2000
(73) Patentinhaber: ROBERT BOSCH GMBH, 70442 Stuttgart (DE)
(72) Erfinder: STEINLECHNER, Siegbert, D-71229 Leonberg (DE)
(86) Internationale Anmeldenummer: DE9800425
(87) Internationale Veröffentlichungsnummer: WO98038474

(56) Entgegenhaltungen:
- US-A- 4 025 848
- US-A- 4 594 000
- US-A- 5 402 230

## Beschreibung

### Stand der Technik

Die Erfindung geht aus von einer Schaltung zur Signalaufbereitung von in einem Heterodyninterferometer auftretenden Referenz- und Meßsignal nach der Gattung des unabhängigen Anspruchs. Die Heterodyninterferometrie wird beispielsweise zur berührungslosen Weg-, Winkel- oder Geschwindigkeitsmessung eingesetzt. Eine optische Meßstrahlung wird auf Gitterstrukturen oder Spiegel gerichtet, die am Meßobjekt angebracht sind. Gegebenenfalls wirkt die Oberfläche des Meßobjekts selbst als Beugungsgitter oder Reflektor.

Aus der EP-A 461 119 ist ein Heterodyninterferometer bekannt, bei dem als Strahlungsquelle eine Laserdiode eingesetzt ist. Der Injektionsstrom der Laserdiode wird periodisch beispielsweise mit einem Sägezahn- oder dreieckförmigem Modulationssignal moduliert. Die Injektionsstrommodulation führt zu einer periodischen Änderung der Frequenz der von der Laserdiode bereitgestellten optischen Strahlung, die mit einem Strahlteiler in zwei Strahlengänge geteilt wird. Im ersten Strahlengang liegt die optische Meßstrecke und im anderen Strahlengang ist ein optisches Laufzeitglied vorgesehen. Wegen der periodischen Modulation tritt zwischen beiden Strahlengängen stets ein Frequenzunterschied auf, der der Heterodynfrequenz entspricht. Die beiden Teilstrahlungen werden nach dem Durchlaufen der optischen Meßstrecke auf einem Strahlungsempfänger zur Interferenz gebracht. Das am Strahlungsempfänger bereitgestellte Meßsignal weist einen sinusförmigen Signalverlauf auf. Die Frequenz des Meßsignals entspricht der Heterodynfrequenz. Die Information über den Weg-, Winkel- oder die Geschwindigkeit ist in der Phasenlage des Meßsignals gegenüber einem Referenzsignal enthalten. Das Referenzsignal kann ebenfalls auf optischem Wege in einer optischen Referenzstrecke bereitgestellt werden. Hierbei werden die beiden Teilstrahlungen nach Durchlaufen der optischen Referenzstrecke auf einem weiteren Strahlungsempfänger zur Interferenz gebracht. Die optische Referenzstrecke kann entfallen, wenn das Referenzsignal elektrisch aus dem Modulationssignal der Laserdiode abgeleitet wird.

Aus der EP-A 729 583 ist eine Vorrichtung zur Messung der Phasendifferenz zwischen zwei elektrischen Signalen bekannt, die in einem Heterodyninterferometer auftreten. Jede vorgegebene Flanke eines ersten Signals und jede vorgegebene Flanke eines zweiten Signals lösen jeweils Zählvorgänge aus, die einerseits eine Ermittlung einer Phasendifferenz von Vielfachen von 360° und andererseits eine hochaufgelöste Phasenmessung von 0 bis 360° ermöglichen. Hinweise zur Aufbereitung der Signale, die der bekannten Vorrichtung zugeführt werden, sind nicht enthalten.

Der Erfindung liegt die Aufgabe zugrunde, eine Schaltung zur Signalaufbereitung von in einem Heterodyninterferometer auftretenden Signalen anzugeben.

Die Aufgabe wird durch die im unabhängigen Anspruch angegebenen Merkmale gelöst.

### Vorteile der Erfindung

Die erfindungsgemäße Schaltung weist den Vorteil auf, daß ein zwischen einem Referenz- und einem Meßsignal periodisch auftretender Vorzeichenwechsel die Ermittlung der Phasendifferenz nicht beeinflußt. Ein derartiger periodisch auftretender Vorzeichenwechsel entsteht durch die Modulation der Strahlungsquelle mit dem vorgegebenen Modulationssignal. Ein Phasensprung tritt auf, wenn das Vorzeichen der Steigung der Frequenzänderung wechselt.

Die erfindungsgemäße Schaltung setzt voraus, daß das Referenzsignal und das Meßsignal, zwischen denen die zu ermittelnde Phasendifferenz auftritt, die gleiche Heterodynfrequenz aufweisen und daß die Heterodynfrequenz auf ein ganzzahliges Vielfaches der Modulationsfrequenz der Strahlungsquelle festgelegt ist. Dies läßt sich durch geeignete Dimensionierung eines optischen Laufzeitgliedes oder einer geeigneten Festlegung der Amplitude des Modulationssignals stets erreichen.

Aus dem Modulationssignal wird ein Torsignal abgeleitet, dessen Periodendauer der Modulationsperiodendauer entspricht. Mit dem Torsignal wird das Referenzsignal durch Multiplikation derart gefiltert, daß diejenigen Signalanteile des Referenzsignals weitergeleitet werden, die dasselbe Phasenvorzeichen aufweisen. Das Meßsignal wird gleichermaßen mit dem Torsignal durch Multiplikation derart gefiltert, daß nur die Signalanteile des Meßsignals weitergeleitet werden, die dasselbe Vorzeichen aufweisen. Die torsignalgefilterten Signale können einem aus dem Stand der Technik bekannten Phasenvergleicher zugeführt werden, der die Phasendifferenz ermittelt, aus der das Ergebnis ableitbar ist.

Vorteilhafte Weiterbildungen und Ausgestaltungen der erfindungsgemäßen Schaltung ergeben sich aus abhängigen Ansprüchen.

Die weitere Signalaufbereitung vereinfacht sich, wenn die torsignalgefilterten Signale jeweils einem auf die Heterodynfrequenz abgestimmten Bandpaßfilter zugeführt sind. Die Bandpässe formen aus den unstetigen torsignalgefilterten Signalen wieder kontinuierliche Signale, die mit analoger Schaltungstechnik einfach weiterbearbeitet werden können.

Vorzugsweise sind die torsignalgefilterten oder bandpaßgefilterten Signale jeweils einem Mischer zugeführt, der ein Herabsetzen der Signalfrequenz ermöglicht, um die weitere Signalaufbereitung nochmals einfacher gestalten zu können.

Die torsignal- oder bandpaßgefilterten oder heruntergemischten Signale werden vorzugsweise einer Tiefpaßfilterung unterworfen. Die Tiefpaßfilterung beseitigt nicht gewünschte Signalanteile, die beispielsweise im Mischer entstehen können, und reduziert weiterhin die Rauschsignalanteile mit denen die Signale behaftet sein können.

Die weitere Signalaufbereitung gestaltet sich besonders einfach, wenn die Signale einem Komparator zugeführt werden, so daß die Signale als Digitalsignale zur Verfügung stehen, die ein digitaler Phasenvergleicher verarbeiten kann.

Als Strahlungsquelle im Heterodyninterferometer ist vorzugsweise eine Laserdiode vorgesehen, die eine einfache Modulation der optischen Strahlung durch Modulation des Injektionsstroms ermöglicht. Ein Netzwerk ermöglicht die Kompensation von Nichtlinearitäten und das Berücksichtigen von thermischen Zeitkonstanten in der Laserdiode. Das Netzwerk ermöglicht die Beeinflussung des Injektionsstroms der Laserdiode derart, daß die Heterodynfrequenz über einen größeren Zeitraum konstant ist. Mit dieser Maßnahme kann das Zeitfenster, das durch das Torsignal festgelegt ist, näher an den theoretisch maximalen Wert herangeführt werden, der 50 % der Modulationsperiodendauer entspricht.

Eine besonders vorteilhafte Ausgestaltung sieht vor, daß das Referenzsignal aus dem Modulationssignal abgeleitet ist. Mit dieser Maßnahme entfällt die ansonsten erforderliche optische Referenzstrecke sowie ein weiterer Strahlungsempfänger.

Weitere vorteilhafte Weiterbildungen und Ausgestaltungen ergeben sich aus weiteren abhängigen Ansprüchen und aus der folgenden Beschreibung.

### Zeichnung

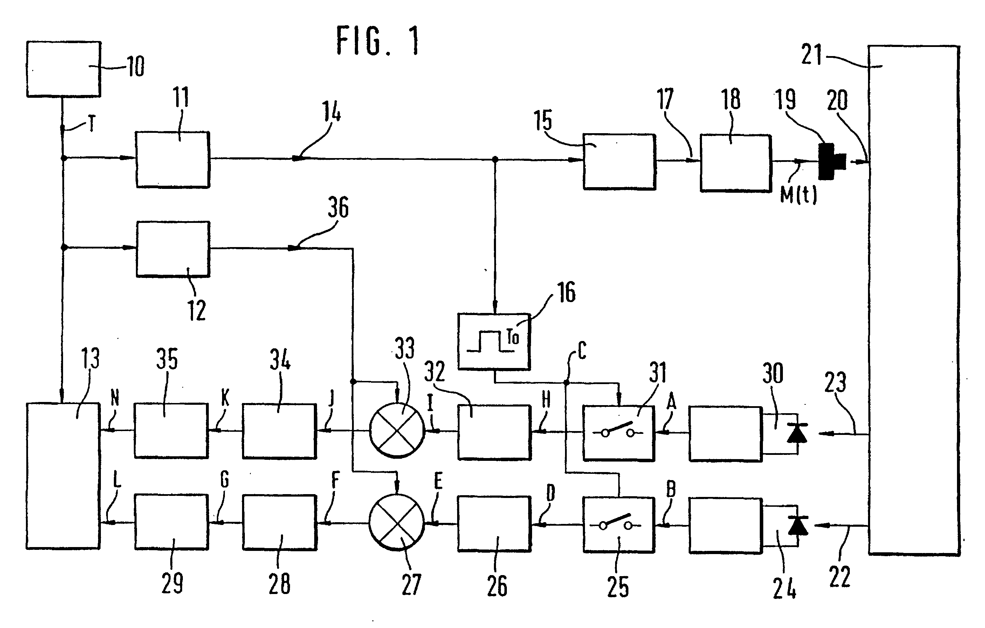

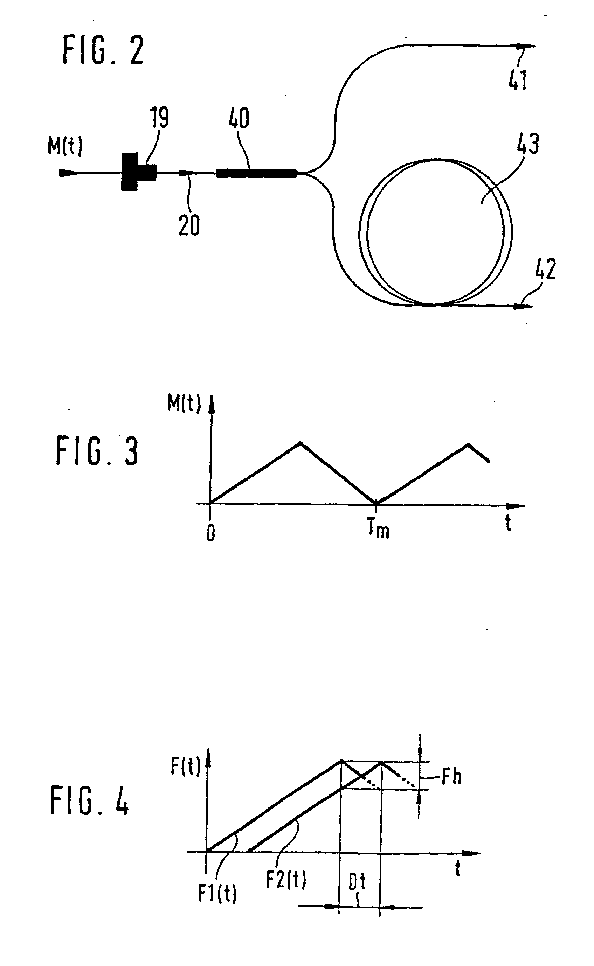

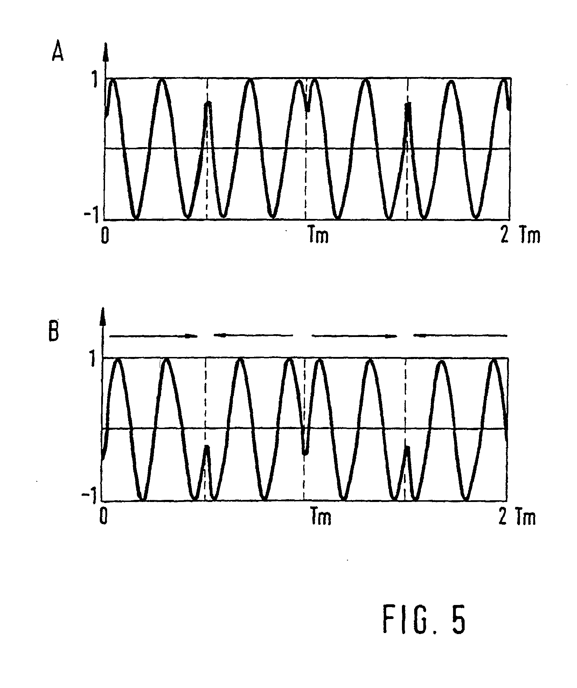

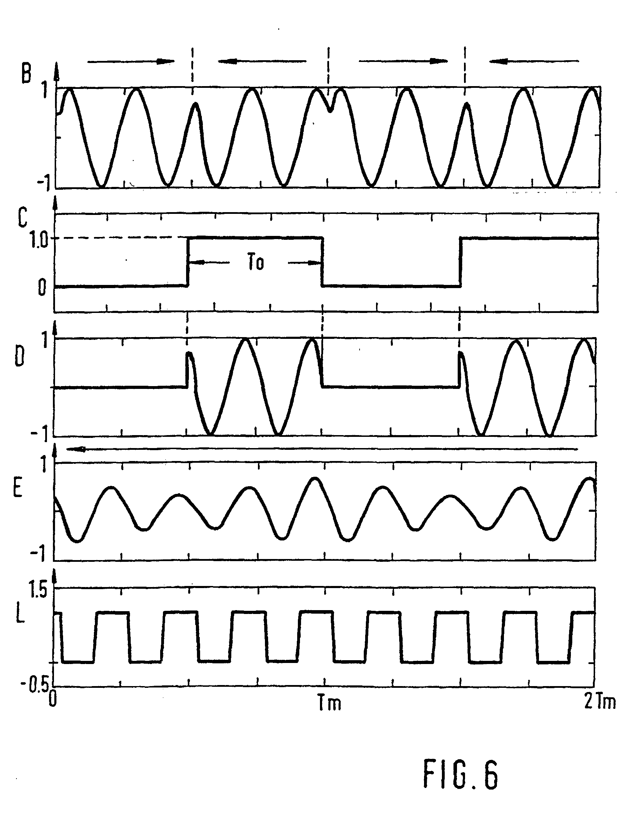

Figur 1 zeigt ein Blockschaltbild einer erfindungsgemäßen Schaltung, Figur 2 zeigt ein Teil einer optischen Strecke, Figur 3 zeigt ein Modulationssignal, Figur 4 zeigt ein in der optischen Strecke auftretenden Signalverlauf, Figur 5 zeigt ein Referenz- und ein Meßsignal und Figur 6 zeigt Signalverläufe, die in der Schaltung gemäß Figur 1 auftreten.

Figur 1 zeigt ein Blockschaltbild einer Schaltung zur Signalaufbereitung von einem in einem Heterodyninterferometer auftretenden Referenzsignal A und einem Meßsignal B. Ein von einem Quarzoszillator 10 bereitgestelltes Taktsignal T ist einem ersten Frequenzteiler 11, einem zweiten Frequenzteiler 12 sowie einem Phasenvergleicher 13 zugeleitet. Ein Ausgangssignal 14 des ersten Frequenzteilers 11 ist einem Modulator 15 und einer Torsignalschaltung 16 zugeleitet. Ein Ausgangssignal 17 des Modulators 15 gelangt nach Durchlaufen eines Netzwerk 18 als Modulationssignal M(t) in eine Laserdiode 19.

Die Laserdiode 19 gibt eine optische Strahlung 20 an eine optische Strecke 21 ab, die eine Meßstrahlung 22 sowie eine Referenzstrahlung 23 bereitstellt.

Die Meßstrahlung 22 trifft auf einen ersten Strahlungsempfänger 24, der das Meßsignal B abgibt. Das Meßsignal B durchläuft eine erste Torsignalschaltung 25 und gelangt als torsignalgefiltertes Meßsignal D in ein erstes Bandpaßfilter 26, das ein bandpaßgefiltertes Meßsignal E abgibt. Nach dem Passieren eines ersten Mischers 27 gelangt das heruntergemischte Meßsignal F in ein erstes Tiefpaßfilter 28, das ein tiefpaßgefiltertes Meßsignal G einem ersten Komparator 29 zuführt.

Die Referenzstrahlung 23 wird von einem zweiten Strahlungsempfänger 30 erfaßt, der das Referenzsignal A bereitstellt, das nach Durchlaufen eines zweiten Torsignalfilters 31 als torsignalgefiltertes Referenzsignal H einem zweiten Bandpaßfilter 32 zugeleitet ist. Das nach Verlassen des zweiten Bandpaßfilters 32 bandpaßgefilterte Referenzsignal I gelangt in einen zweiten Mischer 33. Das den zweiten Mischer 33 verlassende heruntergemischte Referenzsignal J gelangt nach einer Tiefpaßfilterung in einem zweiten Tiefpaßfilter 34 als tiefpaßgefiltertes Referenzsignal K in einen zweiten Komparator 35.

Die beiden Torsignalfilter 25, 31 werden von einem von der Torsignalschaltung 16 bereitgestellten Torsignal C beaufschlagt. Die beiden Mischer 27, 33 erhalten ein Ausgangssignal 36 des zweiten Frequenzteilers 12 zugeführt. Die beiden Komparatoren 29, 35 geben ein erstes Eingangssignal L und ein zweites Eingangssignal N an den Phasenvergleicher 13 ab.

Figur 2 zeigt einen Teil der in Figur 1 eingetragenen optischen Strecke 21. Die von der Laserdiode 19 abgegebene optische Strahlung 20 gelangt nach Durchlaufen eines Strahlteilers 40 als erste optische Strahlung 41 und als zweite optische Strahlung 42 in die ansonsten nicht näher gezeigte optische Strecke 21. Die zweite optische Strahlung 42 durchläuft ein optisches Laufzeitglied 43.

Figur 3 zeigt ein Beispiel des Modulationssignals M(t) in Abhängigkeit von der Zeit t. Gezeigt ist ein wenigstens näherungsweise dreieckförmiger Signalverlauf, wobei die Periodendauer mit Tₘ eingetragen ist.

Figur 4 zeigt die optischen Frequenzen F(t) der beiden optischen Strahlungen 41, 42. Mit F1(t) ist die Frequenz der ersten optischen Strahlung 41 und mit F2(t) ist die Frequenz der zweiten optischen Strahlung 42 bezeichnet. Zu jedem vorgegebenen Zeitpunkt tritt zwischen den beiden Frequenzen F1(t), F2(t) eine Frequenzdifferenz auf, die als Heterodynfrequenz Fh bezeichnet wird. Gleiche Frequenzen erreichen die beiden optischen Strahlungen 41, 42 nach einem Zeitversatz Dt.

Figur 5 zeigt das Referenzsignal A sowie das Meßsignal B jeweils in Abhängigkeit von der Zeit Tm.

Figur 6 zeigt das Meßsignal B, das Torsignal C, das torsignalgefilterte Meßsignal D, das bandpaßgefilterte Meßsignal E sowie das erste Eingangssignal L jeweils in Abhängigkeit von der Zeit Tm. Das Torsignal C weist eine Fensterdauer von To auf.

Die erfindungsgemäße Schaltung arbeitet folgendermaßen:
Der in Figur 1 gezeigte Teil der optischen Strecke 21 ist Teil eines Heterodyninterferometers, bei dem die erste und die zweite optische Strahlung 41, 42 jeweils eine Referenzstrecke sowie eine Meßstrecke durchlaufen und auf den Strahlungsempfängern 24, 30 jeweils zur Interferenz gebracht werden. Mit dem Modulationssignal M(t) wird der Injektionsstrom der Laserdiode 19 moduliert. Ein geeignetes Modulationssignal M(t) ist in Figur 3 gezeigt. Geeignet ist demnach beispielsweise ein dreieckförmiges Signal. Anstelle des in Figur 3 gezeigten dreieckförmigen Signals kann auch ein sägezahnförmiges Signal vorgesehen sein. Die Periodendauer des Modulationssignals M(t) beträgt Tm. Neben der Beeinflussung der Strahlungsleistung der Laserdiode 19, die hier im folgenden nicht relevant ist, ändert sich insbesondere die Frequenz der von der Laserdiode 19 abgegebenen optischen Strahlung 20. Aus der von der Laserdiode 19 bereitgestellten Strahlung 20 stellt der Strahlteiler 40 die erste und zweite optische Strahlung 41, 42 her. Die zweite optische Strahlung 42 hat gegenüber der ersten optischen Strahlung 41 das optische Laufzeitglied 43 durchlaufen. Das optische Laufzeitglied 43 kann beispielsweise als optischer Umweg in Luft, in einer Glasfaser oder beispielsweise in einem Prisma realisiert werden. Aufgrund der periodischen Modulation weisen die beiden optischen Strahlungen 41, 42 zu jedem Zeitpunkt einen Frequenzunterschied auf, der als Heterodynfrequenz Fh bezeichnet wird.

Das Entstehen der Heterodynfrequenz Fh wird anhand von Figur 4 erläutert. Figur 4 zeigt die optischen Frequenzen F(t) in Abhängigkeit von der Zeit t. Das optische Laufzeitglied 43 verzögert die zweite optische Strahlung 42 um den Zeitversatz Dt gegenüber der ersten optischen Strahlung 41. Unter der Voraussetzung, daß sich die von der Laserdiode 19 abgegebene Frequenz der optischen Strahlung durch das Modulationssignal M(t) ständig ändert, tritt zu jedem Zeitpunkt zwischen den beiden optischen Strahlungen 41, 42 die gleiche Differenzfrequenz, die Heterodynfrequenz Fh, auf. Der in Figur 4 gezeigte jeweils lineare Frequenzanstieg und der angedeutete lineare Frequenzabfall wird mit dem in Figur 3 gezeigten dreieckförmigen Signalverlauf des Modulationssignals M(t) erzielt.

Die optische Strecke 21 enthält beispielsweise eine feste Referenz- und eine variable Meßstrecke. Die Meßstrecke wird durch eine Bewegung eines Meßobjekts verändert. Die Referenzstrecke dient zur Erzeugung der Referenzphase. Jeder der beiden Strahlungsempfänger 24, 30 muß sowohl die erste als auch die zweite optische Strahlung 41, 42 zugeführt bekommen. Nur dann ist gewährleistet, daß anstelle der mit elektrischen Mitteln nicht ohne weiteres auswertbare optische Signalfrequenz elektrische Signale mit der Heterodynfrequenz Fh auszuwerten sind.

Das Referenzsignal A und das Meßsignal B, die in Figur 5 in Abhängigkeit von der Zeit, eingetragen in Maßeinheiten der Periodendauer Tm des Modulationssignals M(t), gezeigt sind, weisen jeweils einen sinusförmigen Verlauf auf, wobei die wesentliche Information in der Phasenlage enthalten ist.

Steht das Referenzsignal A nicht zur Verfügung, so kann das Referenzsignal auch elektrisch aus dem Modulationssignal M(t) hergestellt werden. Störeinflüsse, die auf die optische Strecke 21 wirken, wie beispielsweise eine sich ändernde Umgebungstemperatur, können bei der elektrischen Realisierung des Referenzsignals A durch elektrische Beeinflussung gegebenenfalls berücksichtigt werden.

Die erfindungsgemäße Schaltung zur Signalaufbereitung ermöglicht die Ermittlung der Phasendifferenz zwischen dem in Figur 5 gezeigten Referenzsignal A und dem Meßsignal B. Die beiden Signale A, B weisen zu jedem Zeitpunkt die zu ermittelnde Phasendifferenz auf. Voraussetzung ist, daß das Referenzsignal A und das Meßsignal B die gleiche Heterodynfrequenz Fh aufweisen und daß die Heterodynfrequenz auf ein ganzzahliges Vielfaches der Modulationsfrequenz festgelegt ist. Dies läßt sich durch geeignete Dimensionierung des optischen Laufzeitglieds 43 und/oder einer geeigneten Festlegung der Amplitude des Modulationssignals M(t) stets erreichen.

Beide Signale A, B erleiden zu den Zeitpunkten Tm/2 jeweils Phasensprünge, die durch die Änderung der Steigung des Modulationssignals M(t) verursacht sind. Die Phasensprünge erschweren die Ermittlung der Phasendifferenz. Die erfindungsgemäße Schaltung ermöglicht eine Signalaufbereitung, die zu dem ersten und zweiten Eingangssignal L, N führt, welche von einem aus dem Stand der Technik bekannten Phasenvergleicher 13 verarbeitet werden können. Da die Signalverarbeitung beider Signale A, B identisch ist, wird im folgenden nur die Signalverarbeitung des Meßsignals B anhand des Blockschaltbilds gemäß Figur 1 und anhand der in Figur 6 gezeigten Signalverläufe in Abhängigkeit von der Zeit beschrieben.

Der Quarzoszillator 10 stellt das Taktsignal T bereit, das eine Frequenz von einigen MHz, beispielsweise 32 MHz aufweist. Aus dem Taktsignal T werden alle weiteren benötigten Signale abgeleitet. Der erste Teiler 10 teilt das Taktsignal T beispielsweise durch 32, so daß die Frequenz des Ausgangssignals 14 des ersten Teilers 11 ein MHz beträgt. Der Kehrwert der Frequenz des Ausgangssignals 14 des ersten Teilers 11 legt die Periodendauer Tm des im Modulator 15 erzeugten Modulationssignals M(t) fest. Der Modulator 15 gibt das Ausgangssignal 15 an das Netzwerk 18 ab, welches das Modulationssignal M(t) erzeugt. Die mit dem vorzugsweise linearen Netzwerk 18 vorgebbare Verzerrung des Laserdiodenstroms ermöglicht es, Nichtlinearitäten oder beispielsweise thermische Zeitkonstanten der Laserdiode 19 zu kompensieren. Mit dieser Maßnahme wird erreicht, daß die Heterodynfrequenz Fh über einen größeren Zeitraum konstant ist.

Die vom ersten Strahlungsempfänger 24 erfaßte Meßstrahlung 22, die durch Interferenz der beiden optischen Strahlungen 41, 42 die Heterodynfrequenz Fh aufweist, wird vom ersten Strahlungsempfänger 24 erfaßt, aufbereitet und als Meßsignal B zur Verfügung gestellt. Das Meßsignal B wird im ersten Torsignalfilter 25 mit dem Torsignal C multipliziert und anschließend als torsignalgefiltertes Meßsignal D vom Torsignalfilter 25 abgegeben. Das Torsignal C ist im zweiten Bild von Figur 6 dargestellt. Das Torsignal C wird aus dem Ausgangssignal 14 des ersten Teilers 11 hergestellt. Das Torsignal C ist ein rechteckförmiges Signal mit der Periodendauer Tm und der Fensterdauer To. In Figur 6 ist ein Tastverhältnis von näherungsweise 50 % zugrundegelegt. Das Torsignal C wird beispielsweise über monostabile Kippstufen aus dem Ausgangssignal 14 des ersten Teilers 11 abgeleitet. Die Torsignalschaltung 16 kann hierzu zwei monostabile Kippstufen enthalten. Mit den Zeitkonstanten der beiden monostabilen Kippstufen kann die relative Lage des entstehenden Signalfensters und dessen relative Fensterdauer To vorgegeben werden. Das Torsignal C schneidet diejenigen Signalanteile aus dem Meßsignal B heraus, die dasselbe Phasenvorzeichen bei konstanter Heterodynfrequenz Fh aufweisen. Durch eine präzise Festlegung des Starts des Fensters sowie die genaue Festlegung der Dauer To des Fensters trägt das Torsignal C auch zur Unterdrückung von Störsignalen bei, die in der Laserdiode 19 bei der Änderung der Steigung des Modulationssignals M(t) in der Praxis auftreten können.

Die Torsignalfilter 25, 31 sind als Analogschalter realisierbar, wobei die Schaltfunktion durch das Torsignal C veranlaßt ist. Elektrisch betrachtet entspricht die Torsignalfilterung einer Multiplizierung des Meßsignals B mit dem Torsignal C. Das Ergebnis ist das torsignalgefilterte Meßsignal D, das im dritten Bild von Figur 6 gezeigt ist. Das torsignalgefilterte Meßsignal D enthält nur noch diejenigen Anteile des Meßsignals B, die jeweils dasselbe Phasenvorzeichen aufweisen.

Das anschließend vorgesehene erste Bandpaßfilter 26, dessen Mittenfrequenz auf die Heterodynfrequenz Fh abgestimmt ist, führt zu einer Interpolation des torsignalgefilterten Meßsignals B. Die durch die Torsignalfilterung entstandenen Lücken werden damit beseitigt. Aus dem bandpaßgefilterten Meßsignal E könnte nach einer Begrenzung, die beispielsweise ein Komparator vornehmen kann, bereits das erste Eingangssignal L abgeleitet werden. Eine Vereinfachung der Signalaufbereitung ist dagegen mit dem in Figur 1 gezeigten ersten Mischer 27 möglich. Das bandpaßgefilterte Meßsignal E, dessen Grundfrequenz die Heterodynfrequenz Fh ist, wird im ersten Mischer 27 auf das heruntergemischte Meßsignal F umgesetzt. Der erste Mischer 27 erhält das Ausgangssignal 36 des zweiten Teilers 12 zugeleitet, das Signalanteile mit der für das Mischen erforderlichen Frequenz aufweist.

Nach Durchlaufen des ersten Tiefpaßfilters 28, welches das heruntergemischte Meßsignal F einerseits von unerwünschten Mischsignalanteilen und andererseits von Rauschen weitgehend befreit, wird das tiefpaßgefilterte Meßsignal G im ersten Komparator 29 zum ersten Eingangssignal L umgeformt, der das tiefpaßgefilterte Meßsignal G mit einem vorgegebenen Schwellenwert vergleicht. Das erste Eingangssignal L ist im Bild 5 von Figur 6 gezeigt, wobei das erste Eingangssignal L allerdings unmittelbar aus dem bandpaßgefilterten Meßsignal E abgeleitet ist. Die Heruntermischung im ersten Mischer 27 würde gegenüber dem in Figur 6 gezeigten ersten Eingangssignal L die Periodendauer erhöhen.

Die Signalaufbereitung des Referenzsignals A entspricht vollständig der bereits beschriebenen Signalaufbereitung des Meßsignals B. Ergebnis der Aufbereitung des Referenzsignals A ist das zweite Eingangssignal N. Der Phasenvergleicher 13, der beispielsweise in dem eingangs beschriebenen Stand der Technik näher erläutert ist, ermittelt die zwischen den beiden Eingangssignalen L, N vorliegende Phasendifferenz. Die Phasendifferenz ist ein Maß für den in der optischen Strecke 21 aufgetretenen Weg oder Winkel, wobei eine zeitliche Änderung einer Geschwindigkeit oder einer Winkelgeschwindigkeit entspricht.

## Patentansprüche

1. Schaltung zur Signalaufbereitung von einem in einem Heterodyninterferometer auftretenden Referenzsignal (A) und einem Meßsignal (B), mit den Merkmalen:
- das Referenzsignal (A) und das Meßsignal (B), zwischen denen eine zu ermittelnde Phasendifferenz auftritt, weisen die gleiche Heterodynfrequenz (Fh) auf,
- ein Modulator (15) steuert die Frequenz der von einer Strahlungsquelle (19) abgegebenen optischen Strahlung (20) mit einem Modulationssignal (M(t), das eine vorgegebene Modulationsperiodendauer (Tm) aufweist,
- die Heterodynfrequenz (Fh) ist auf ein ganzzahliges Vielfaches der Modulationsfrequenz festgelegt,
- aus dem Modulationssignal (M(t)) wird ein Torsignal (C) abgeleitet, dessen Periodendauer der Modulationsperiodendauer (Tm) entspricht,
- das Referenzsignal (A) wird mit dem Torsignal (C) gefiltert, so daß die Signalanteile weitergeleitet werden, die dasselbe Phasenvorzeichen aufweisen,
- das Meßsignal (B) wird mit dem Torsignal (C) gefiltert, so daß die Signalanteile weitergeleitet werden, die dasselbe Phasenvorzeichen aufweisen und
- die torsignalgefilterten Signale (D, H) sind einem Phasenvergleicher (13) zugeführt, der die Phasendifferenz ermittelt.

2. Schaltung nach Anspruch 1, **dadurch gekennzeichnet, daß** die torsignalgefilterten Signale (D, H) jeweils einem auf die Heterodynfrequenz (Fh) abgestimmten Bandpaßfilter (26, 32) zugeführt sind.

3. Schaltung nach Anspruch 2, **dadurch gekennzeichnet, daß** die torsignalgefilterten Signale (D, H) jeweils einem Mischer (27, 33) zum Herabsetzen der Frequenz zugeführt sind.

4. Schaltung nach Anspruch 2, **dadurch gekennzeichnet, daß** die torsignalgefilterten Signale (D, H) jeweils einem Tiefpaßfilter (28, 34) zugeführt sind.

5. Schaltung nach Anspruch 2, **dadurch gekennzeichnet, daß** die torsignalgefilterten Signale (D, H) jeweils einem Komparator (29, 35) zugeführt sind und daß die von den Komparatoren (29, 35) abgegebenen Signale als erstes und zweites Eingangssignal (L, N) dem Phasenvergleicher (13) zugeführt sind.

6. Schaltung nach einem der vorhergehenden Ansprüche, **dadurch gekennzeichnet, daß** als Strahlungsquelle (19) eine Laserdiode vorgesehen ist.

7. Schaltung nach Anspruch 6, **dadurch gekennzeichnet, daß** ein nichtlineares Kennlinienglied (18) zur Verzerrung des Laserdiodenstroms vorgesehen ist.

8. Schaltung nach einem der vorhergehenden Ansprüche, **dadurch gekennzeichnet, daß** das Referenzsignal (A) aus dem Modulationssignal (M(t)) abgeleitet ist.

9. Schaltung nach einem der vorhergehenden Ansprüche,
**dadurch gekennzeichnet, daß** die Dauer (To) des durch das Torsignal (C) gebildeten Fensters auf vorgegebene Werte festgelegt ist.

10. Schaltung nach einem der vorhergehenden Ansprüche, **dadurch gekennzeichnet, daß** der Startzeitpunkt des durch das Torsignal (C) gebildeten Fensters auf einen vorgebbaren Wert festgelegt ist.

## Claims

1. Circuit for signal conditioning of a measurement signal (B) and of a reference signal (A) which occurs in a heterodyne interferometer, having the following features:
- the reference signal (A) and the measurement signal (B) between which a phase difference which is to be determined loccurs have the same heterodyne frequency (Fh),
- a modulator (15) controls the frequency of the optical radiation (20) which is emitted from a radiation source (19), by means of a modulation signal (M(t)) which has a predetermined modulation period duration (Tm),
- the heterodyne frequency (Fh) is fixed at an integer multiple of the modulation frequency,
- a gate signal (C) is derived from the modulation signal (M(t)), whose period duration corresponds to the modulation period duration (Tm),
- the reference signal (A) is filtered using the gate signal (C) such that those signal components which have the same phase mathematical sign are passed on,
- the measurement signal (B) is filtered using the gate signal (C) such that those signal components which have the same phase mathematical sign are passed on, and
- the signals (D, H) which have been filtered by the gate signal are passed to a phase comparator (13) which determines the phase difference.

2. Circuit according to Claim 1, **characterized in that** the signals (D, H) which have been filtered by the gate signal are passed to a respective bandpass filter (26, 32) which is tuned to the heterodyne frequency (Fh).

3. Circuit according to Claim 2, **characterized in that** the signals (D, H) which have been filtered by the gate signal are passed to a respective mixer (27, 33) in order to reduce the frequency.

4. Circuit according to Claim 2, **characterized in that** the signals (D, H) which have been filtered by the gate signal are supplied to a respective low-pass filter (28, 34).

5. Circuit according to Claim 2, **characterized in that** the signals (D, H) which have been filtered by the gate signal are passed to a respective comparator (29, 35), and **in that** the signals which are emitted from the comparators (29, 35) are passed as a first and a second input signal (L, N) to the phase comparator (13).

6. Circuit according to one of the preceding claims, **characterized in that** a laser diode is provided as the radiation source (19).

7. Circuit according to Claim 6, **characterized in that** a non-linear characteristic element (18) is provided for distortion of the laser diode current.

8. Circuit according to one of the preceding claims, **characterized in that** the reference signal (A) is derived from the modulation signal (M(t)).

9. Circuit according to one of the preceding claims, **characterized in that** the duration (To) of the window which is formed by the gate signal (C) is fixed at predetermined values.

10. Circuit according to one of the preceding claims, **characterized in that** the starting time of the window which is formed by the gate signal (C) is fixed at a value which can be predetermined.

## Revendications

1. Montage de mise en forme de signaux pour un signal de référence (A) produit par un interféromètre hétérodyne et un signal de mesure (B) ayant les caractéristiques suivantes :
- le signal de référence (A) et le signal de mesure (B), entre lesquels il y a une différence de phase à déterminer, ont la même fréquence hétérodyne (Fh),
- un modulateur (15) commande la fréquence du rayonnement optique (20) émis par une source de rayonnement (19) avec un signal de modulation (M(t) ayant une période de modulation de durée prédéterminée (Tm),
- la fréquence hétérodyne (Fh) est fixée à un multiple entier de la fréquence de modulation,
- à partir du signal de modulation (M(t) on déduit un signal de porte (C) dont la période a une durée correspondant à celle (Tm) de la période de modulation,
- le signal de référence (A) est filtré par le signal de porte (C) pour transmettre les composantes du signal ayant le même signe algébrique de phase,
- le signal de mesure (B) est filtré par un signal de porte (C) pour transmettre les composantes de signal ayant le même signe algébrique de phase et
- les signaux (D, H) filtrés provenant du signal de porte sont appliqués à un comparateur de phases (13) qui détermine la différence de phases.

2. Circuit selon la revendication 1,
**caractérisé en ce que**
les signaux (D, H), filtrés du signal de porte, sont appliqués respectivement à un filtre passe-bande (26, 32) accordé sur la fréquence hétérodyne (Fh).

3. Circuit selon la revendication 2,
**caractérisé en ce que**
les signaux (D, H), filtrés du signal de porte, sont appliqués respectivement à un mélangeur (27, 33) pour abaisser la fréquence.

4. Circuit selon la revendication 2,
**caractérisé en ce que**
les signaux (D, H), filtrés du signal de porte, sont appliqués respectivement à un filtre passe-bas (28, 34).

5. Circuit selon la revendication 2,
**caractérisé en ce que**
les signaux (D, H), filtrés du signal de porte, sont appliqués respectivement à un comparateur (29, 35) et
les signaux émis par les comparateurs (29, 35) sont appliqués comme premier et second signal d'entrée (L, N) au comparateur de phase (13).

6. Circuit selon l'une des revendications précédentes,
**caractérisé en ce que**
la source de rayonnement (19) est une diode laser.

7. Circuit selon la revendication 6,
**caractérisé par**
un élément à caractéristique (18) non linéaire pour déformer le courant de la diode laser.

8. Circuit selon l'une des revendications précédentes,
**caractérisé en ce que**
le signal de référence (A) est déduit du signal de modulation (M(t)).

9. Circuit selon l'une des revendications précédentes,
**caractérisé en ce que**
la durée (To) de la fenêtre formée par le signal de porte (C) est fixée à des valeurs prédéterminées.

10. Circuit selon l'une quelconque des revendications précédentes,
**caractérisé en ce que**
le point de départ de la fenêtre formée par le signal de porte (C) est fixé à une valeur prédéterminée.
